# EUROPÄISCHE PATENTSCHRIFT

(11) **EP 4 049 359 B1**
(45) Veröffentlichungstag und Bekanntmachung des Hinweises auf die Patenterteilung: **25.10.2023**
(21) Anmeldenummer: 20828986.8
(22) Anmeldetag: 14.12.2020
(51) Int. Cl.: H02K 3/50, H02K 15/00, B05D 1/26, B05D 5/10, B05C 5/02

(54) **BAUTEIL FÜR EINE ELEKTRISCHE MASCHINE MIT EINER POLYMERBESCHICHTUNG UND VERFAHREN ZUM BESCHICHTEN EINES BAUTEILS**
COMPONENT FOR AN ELECTRIC MACHINE WITH A POLYMER COATING AND METHOD FOR COATING A COMPONENT
COMPOSANT POUR UNE MACHINE ÉLECTRIQUE DOTÉ D'UN REVÊTEMENT POLYMÈRE ET PROCÉDÉ DE REVÊTEMENT D'UN COMPOSANT

(30) Priorität: 20.12.2019 EP 19218458
(43) Veröffentlichungstag der Anmeldung: 31.08.2022
(73) Patentinhaber: Siemens Aktiengesellschaft, 80333 München (DE)
(72) Erfinder: BÜTTNER, Klaus, 97618 Hollstadt (DE); KATZENBERGER, Tobias, 97631 Bad Königshofen STT Untereßfeld (DE); KIRCHNER, Klaus, 97645 Ostheim (DE); PLOCHMANN, Bastian, 91413 Neustadt an der Aisch (DE); WARMUTH, Matthias, 97618 Windshausen (DE)
(74) Vertreter: Siemens Patent Attorneys
(86) Internationale Anmeldenummer: PCT/EP2020/085959
(87) Internationale Veröffentlichungsnummer: WO 2021/122450

(56) Entgegenhaltungen:
- WO-A1-2018/099746
- DE-A1- 2 606 401
- FR-A1- 2 216 339
- JP-A- S5 791 647

## Beschreibung

Die Erfindung betrifft ein Bauteil, wie in Anspruch 1 definiert, für eine elektrische Maschine, insbesondere eine rotatorische elektrische Maschine, wobei das Bauteil zumindest eine, an zumindest einem flächigen Bereich des Bauteils angeordnete Polymerschicht umfasst.

Darüber hinaus betrifft die Erfindung eine elektrische Maschine mit mindestens einem solchen Bauteil.

Außerdem betrifft die Erfindung ein Verfahren, wie in Anspruch 9 definiert, zum Erzeugen einer an zumindest einem flächigen Bereich eines Bauteils einer elektrischen Maschine haftenden Polymerschicht.

In vielen elektrischen Geräten, z.B. Elektromotoren, existieren produktionsbedingt und konstruktionsbedingt Bereiche, an den Leitungen verlaufen. Oft ist die Existenz solcher Bereiche mit gewissen Nachteilen und Risiken verbunden. Beispielsweise weisen Elektromotoren oft Bereiche, in denen die Gerätehülle oder Wandungen durchbrochen sind, um in der weiteren Montage elektrische Leitungen verziehen zu können. Ein klassisches Beispiel hierfür ist ein Elektromotor, dessen Anschluss beim Kunden über das sogenannte Klemmbrett im Klemmkasten erfolgt. Dieser ist üblicherweise an einer bestimmten Stelle des Gehäuses angebracht und mittels einer Gehäuseaussparung mit demselben verbunden. Die Montage, Herausführung und der Anschluss der Leitungen erfolgen händisch durch die genannte Aussparung, welche verfahrensbedingt dementsprechende Dimensionen aufweisen muss. Im Anschluss soll der Motor an sich gegenüber Verunreinigung, wie z.B. fallengelassenen Anschlussteilen, Feuchtigkeit und Staub passiviert werden, wodurch die Verbindung zum Klemmbrett eine Schwachstelle darstellt, da der Klemmenkasten kundenseitig jederzeit zugänglich sein sollte.

Um die Durchführung zu verschließen können beispielsweise vorgefertigte Schaumstoffteile händisch eingelegt werden. Dies ist ein zeit- und kostenintensiver Prozess und es bedarf eines hohen Maßes an Sorgfältigkeit, um diesen Prozess durchzuführen. Bei höheren Anforderungen muss der Bereich vorerst passgenau abgeklebt und im Anschluss mit einem Reaktivharz vergossen werden. Die Härtung des Harzes erfolgt bei Raumtemperatur über mehrere Tage. Durch die Vorbereitung und Nachbereitung des Vergusses handelt es sich hierbei um einen sehr aufwändigen Prozess.

Ein weiteres Beispiel der elektrischen Geräte sind Industriemotoren im Niederspannungsbereich. Diese werden mit einer Runddrahtwicklung gefertigt, welche vorerst in einem Wickeleinziehautomaten in Spulenform gewickelt wird und im Anschluss in Statornuten eingezogen wird. Nach dem Wickeleinziehprozess werden die Leitungsenden am Ende jeder Spule, die beispielsweise als Runddrähte oder Lackdrähte ausgebildet sein können, aller (beispielsweise drei) Phasen willkürlich auf der Anschlussseite des Motors gelegt. Je nach gewünschter Schaltung können danach mehrere Drähte parallel geschalten und als Anschlussleitungen von einem der Wickelköpfe (meist von einem anschlussseitigen Wickelkopf) weggeführt. Beispielsweise kann es sich um insgesamt sechs Anschlussleitungen - drei Phasen mit jeweils zwei Enden - handeln. Die Anschlussleitungen treten undefiniert aus dem Wickelkopf aus und müssen alle auf eine Seite geführt werden, um sie nach dem Gehäuse-Fügen durch die vorgesehene Aussparung in das Klemmbrett des Motors führen zu können. Hierfür werden die Leitungen radial auf die Stirnseite des Wickelkopfes gelegt und dort fixiert.

Die Fixierung in diesem Bereich erfolgt aktuell händisch mittels sogenannter Rasterbänder. Dabei werden die Leitungen mit Bandagen am Wickelkopf festgebunden. Der manuelle Fertigungsschritt ist hierbei ein Zeit- und Kostenfaktor.

Darüber hinaus umfassen elektrische Geräte üblicherweise ein Gehäuse oder Bauteile, welche produktionsbedingt Bereiche mit scharfen Kanten aufweisen. Hierzu zählen z.B. metallische Gussgehäuse oder - im Falle eines Elektromotors - die Stator- oder Rotor-Blechpakete, bei denen viele Einzelbleche aufeinandergeschichtet sind und sehr scharfkantige Gebilde darstellen. Durch weitere Bearbeitung, wie z.B. Fräsen oder Bohren, können weitere scharfkantige Bereiche erzeugt werden. In den meisten Fällen werden notwendige Verkabelungen (Beispiel Elektromotor: Einlegen/Einziehen der Wicklungen, Einbringung der Anschlussleitungen) erst im Nachhinein in das vorgefertigte Werkstück eingebracht. Hierbei muss notwendigerweise darauf geachtet werden, dass die Leitungsisolation bzw. die Leitung selbst keinen Schaden erleiden. So ist es z.B. beim Einziehen und Anklemmen der Leitungen des Elektromotors am Klemmbrett desselben. Zudem kommt es im Betrieb unweigerlich zu mechanischer Beanspruchung und somit Positionsänderungen und Vibrationen der Leitungen, wodurch zusätzliche Maßnahmen zum Schutz der Bauteile vor scharfen Kanten und Graten wünschenswert sind.

Ein möglicher Ansatz dem Problem zu begegnen (siehe z.B. JP S57 91647 A), besteht in Anwendung höherwertiger Materialien (z.B. mechanisch belastbarerer Kabelisolation) oder in filigranerer Prozessführung (oftmals hoher Anteil an Handarbeit). Darüber hinaus können zusätzliche Kantenschutz-Einlegeteile eingebracht oder Kabelkanäle vorgesehen werden, wobei die Leitungen in den Kabelkanälen mit Klebstoff übergossen und ausgehärtet werden können (siehe z.B. JP S57 91647 A). Diese Einlegeteile werden vorgefertigt und händisch an kritischen Stellen/Bereichen gelegt bzw. geklebt. Außerdem können die scharfkantigen Bereiche in einem händischen Schritt entgratet werden.

Der Erfindung die Aufgabe zugrunde, die zuvor beschriebenen Nachteile des Standes der Technik auf universelle Art und Weise zu lösen.

Die auf die Vorrichtung bezogene Aufgabe wird mit einem Bauteil der vorgenannten Art erfindungsgemäß dadurch gelöst, dass die Polymerschicht ausgehärteten Kunststoffkleber umfasst und an dem flächigen Bereich haftet, wobei zumindest in einem in die elektrische Maschine eingebauten Zustand des Bauteils an dem zumindest einen flächigen Bereich zumindest eine elektrische Leitung verläuft.

Die auf das Verfahren bezogene Aufgabe wird mit einem Verfahren der oben genannten Art erfindungsgemäß dadurch gelöst, dass mittels einer Düse ein Faden eines thermoplastischen Schmelzklebstoffs erzeugt wird, während des Erzeugens die Düse derart verfahren wird, dass der Faden durch die Verfahrbewegung der Düse schichtweise und flächendeckend auf den flächigen Bereich aufgetragen wird.

Im Zusammenhang mit der vorliegenden Erfindung wird unter dem Begriff "haftende Polymerschicht" eine Polymerschicht verstanden, die an dem Material des flächigen Bereichs kleberlos haftet. Dies bedeutet insbesondere, dass es keine weitere Kleberschicht vorgesehen ist, die das Haften der Polymerschicht an dem flächigen Bereich, beispielsweise als eine Zwischenschicht ermöglichen soll. Vielmehr haftet die Polymerschicht an dem flächigen Bereich selbst ohne weitere Hilfsmittel.

Der ausgehärtete Kunststoffkleber und somit die Polymerschicht ist vorzugsweise klebe- und oder porenfrei.

Bei einer bevorzugten Ausführungsform kann vorgesehen sein, dass genau eine Polymerschicht auf dem flächigen Bereich haftet und die Polymerschicht aus dem ausgehärteten Kunststoffkleber besteht.

Weiterhin kann es zweckdienlich sein, wenn die Polymerschicht durch Aufspritzen oder Aufschleudern oder Aufsprühen des Kunststoffklebers auf den flächigen Bereich erzeugt ist. Hierdurch kann die Polymerschicht jede beliebige Form annehmen. Die Form und die Größe der Schicht können variiert werden.

In einer bevorzugten Ausführungsform kann die Polymerschicht eine Dicke von etwa 0,1 mm bis 3 mm aufweisen, vorzugsweise zwischen 0,5 mm und 1,5 mm, beispielsweise in etwa 1,0 mm aufweisen.

Bei einer bevorzugten Ausführungsform kann das Bauteil als ein Stator ausgestaltet ist, wobei der zumindest eine flächige Bereich an einer Stirnseite eines anschlussseitig angeordneten Wickelkopfes des Stators angeordnet ist, wobei ein Abschnitt der zumindest einen elektrischen Leitung auf dem flächigen Bereich aufliegt und durch die Polymerschicht an dem Wickelkopf fixiert ist.

Dabei kann es mit Vorteil vorgesehen sein, dass der Abschnitt durch die Polymerschicht bedeckt ist.

Darüber hinaus kann es zweckdienlich sein, wenn die Polymerschicht aus dem ausgehärteten Kunststoffkleber besteht, wobei der Kunststoffkleber in Form von Fäden auf den flächigen Bereich mit dem darauf aufliegenden Abschnitt der zumindest einen elektrischen Leitung aufgespritzt ist, so dass die Fäden in Form überlappender Schleifen aufeinander aufgeschleudert sind und eine Netzstruktur bilden. Eine solche Netzstruktur kann beispielsweise über eine Öffnung, wie z.B. eine Kabeldurchführung, gespannt werden.

Die Fäden können dabei einen Durchmesser ca. 50 µm bis 500 µm, beispielsweise 100 µm bis 400 µm, insbesondere 200 µm bis 300 µm aufweisen.

Erfindungsgemäß, weist der zumindest eine flächige Bereich mindestens ein scharfkantiges Gebilde auf, wobei das mindestens eine scharfkantige Gebilde mit der daran haftenden Polymerschicht abgedeckt ist, um die zumindest eine elektrische - zumindest in dem in die elektrische Maschine eingebauten Zustand des Bauteils - an dem zumindest einen flächigen Bereich verlaufende Leitung vor Beschädigung zu schützen. Dadurch dass das scharfkantige Gebilde durch die Polymerschicht abgedeckt ist, kann die an dem flächigen Bereich verlaufende Leitung nicht mit dem scharfkantigen Gebilde in Berührung kommen und ist vor Beschädigungen, insbesondere dann, wenn die Maschine im Betrieb ist, geschützt.

Erfindungsgemäß, besteht die Polymerschicht aus dem ausgehärteten Kunststoffkleber, wobei der Kunststoffkleber in Form von Fäden auf den flächigen Bereich aufgespritzt ist, sodass die Fäden in Form überlappender Schleifen aufeinander aufgeschleudert sind und eine Netzstruktur bilden, die das mindestens eine scharfkantige Gebilde überspannt. Es kann vorgesehen sein, dass das Bauteil als ein Stator oder ein Rotor oder ein Gehäuse ausgestaltet ist.

Überraschend gute Ergebnisse können erzielt werden, wenn der Kunststoffkleber ein thermoplastischer Schmelzklebstoff ist, beispielsweise ein Polyolefin oder ein Polyamid ist. Außerdem wird die Aufgabe der Erfindung mit einer elektrischen, vorzugsweise mit einer rotatorischen elektrischen Maschine mit mindestens einem vorgenannten Bauteil gelöst.

Bei einer bevorzugten Ausführungsform der elektrischen Maschine kann vorgesehen sein, dass das Bauteil als ein (Maschinen-)Gehäuse ausgestaltet ist, der flächige Bereich als ein Bereich des Gehäuses mit mindestens einer Öffnung ausgebildet ist, wobei durch die mindestens eine Öffnung die mindestens elektrische Leitung verläuft, wobei die den ausgehärteten Kunststoffkleber umfassende Polymerschicht die mindestens eine Öffnung überspannt und verschließt und sowohl an der mindestens einen elektrischen Leitung als auch an dem Gehäuse haftet.

Die Aufgabe der Erfindung wird außerdem mit einem eingangs genannten Verfahren erfindungsgemäß dadurch gelöst, dass das Bauteil bereitgestellt wird, wobei zumindest in einem in die elektrische Maschine eingebauten Zustand des Bauteils an dem zumindest einen flächigen Bereich zumindest eine elektrische Leitung verläuft, wobei mittels einer Düse ein Faden eines thermoplastischen Schmelzklebstoffs erzeugt wird, während des Erzeugens die Düse derart verfahren wird, dass der Faden durch die Verfahrbewegung der Düse schichtweise und flächendeckend auf den flächigen Bereich aufgetragen wird.

Bei einer bevorzugten Ausführungsform kann vorgesehen sein, dass der zumindest eine flächige Bereich mindestens ein scharfkantiges Gebilde aufweist und der Faden durch die Verfahrbewegung der Düse schichtweise und flächendeckend auf den flächigen Bereich derart aufgetragen wird, dass der Faden in Form überlappender Schleifen aufgeschleudert wird, um eine Netzstruktur zu bilden, wobei die Netzstruktur das mindestens eine scharfkantige Gebilde überspannt, um die zumindest eine elektrische - zumindest in dem in die elektrische Maschine eingebauten Zustand des Bauteils - an dem zumindest einen flächigen Bereich verlaufende Leitung vor Beschädigung zu schützen.

Bei einer bevorzugten Ausführungsform des erfindungsgemäßen Verfahrens kann vorgesehen sein, dass die Verfahrbewegung eine Rotationsbewegung und eine laterale Bewegung umfasst.

Bei einer bevorzugten Ausführungsform des erfindungsgemäßen Verfahrens kann vorgesehen sein, dass der Faden in Form von Schlingen aufgetragen wird. Insbesondere kann der noch nicht auf den flächigen Bereich gelegte Faden - zwischen dem Düsenauslass und dem flächigen Bereich - in etwa eine 3D-Helix bilden.

Durch die Rotation des primären Klebstofffadens sowie einer lateralen Bewegung des Sprühkopfes kann eine spinnenwebartige Struktur auf der Substratoberfläche erzeugt werden, welche bei genügender Aufdopplung der Schicht beispielsweise porenfrei verschmelzen kann.

Der fadenartige Klebstoff kann durch seine Oberflächenspannung ein überdeckendes Sprühbild, selbst auf sehr konturreichen Substratoberflächen bilden. Die aufgesprühte Schicht kann einen Überzug ähnlich eines Klebefilms auf der Oberfläche bilden.

Außerdem kann es mit Vorteil vorgesehen sein, dass der thermoplastische Schmelzklebstoff der Düse mit einem Arbeitsdruck zugeführt wird, der zwischen 1 bar und 10 bar liegt.

Weitere Vorteile können sich ergeben, wenn der thermoplastische Schmelzklebstoff der Düse mit einer Arbeitstemperatur zugeführt wird, die zwischen 180 °C und 220 °C liegt.

Bei einer bevorzugten Ausführungsform kann vorgesehen sein, dass das Auftragen des thermoplastischen Schmelzklebstoffs vollautomatisch, insbesondere mit einem Roboter erfolgt.

Weitere Merkmale, Eigenschaften und Vorteile der vorliegenden Erfindung ergeben sich aus der nachfolgenden Beschreibung unter Bezugnahme auf die beiliegenden Figuren. Darin zeigen schematisch:
- FIG 1: ein in einer elektrischen Maschine eingebautes Bauteil;
- FIG 2: eine rotatorische elektrische Maschine;
- FIG 3: einen Schnitt durch das Blechpaket der rotatorischen elektrischen Maschine der FIG 2;
- FIG 4: einen anschlussseitigen Wickelkopf der rotatorischen elektrischen Maschine der FIG 2;
- FIG 5: einen vergrößerten Ausschnitt der FIG 4;
- FIG 6: einen in ein Gehäuse gefügten Stator;
- FIG 7: einen vergrößerten Ausschnitt der FIG 6;
- FIG 8: eine Schnittdarstellung eines Gehäuses im Bereich des Klemmenkastens;
- FIG 9, 10: Fäden vom thermoplastischen Schmelzklebstoff beim Auftragen auf einen flächigen Bereich zum Erzeugen der Polymerschicht, und
- FIG 11: Vollautomatisiertes Auftragen des Kunststoffklebers.

In den Ausführungsbeispielen und Figuren können gleiche oder gleich wirkende Elemente jeweils mit den gleichen Bezugszeichen versehen sein.

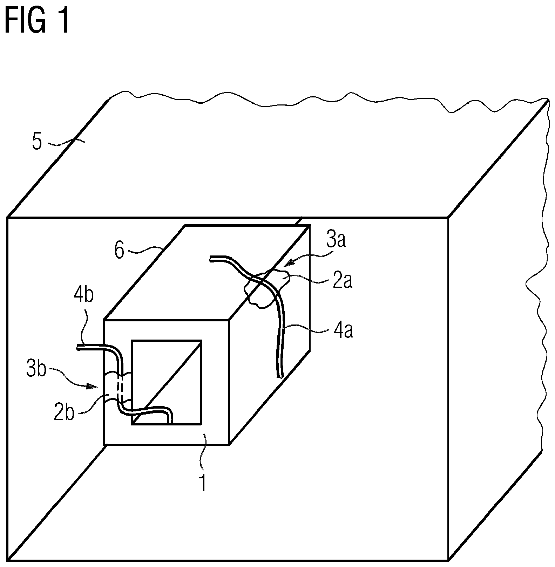

FIG 1 zeigt schematisch ein Bauteil 1, das in einer elektrischen Maschine 5 eingebaut ist. Das Bauteil 1 kann mehrere an entsprechenden flächigen Bereichen 3a, 3b des Bauteils 1 haftende Polymerschichten 2a, 2b umfassen. Die Polymerschichten 2a, 2b umfassen ausgehärteten Kunststoffkleber. Zumindest in einem in die elektrische Maschine 5 eingebauten Zustand des Bauteils 1 (wie in FIG 1 gezeigt) kann an den jeweiligen flächigen Bereichen zumindest eine elektrische Leitung verlaufen 4a, 4b. FIG 1 zeigt eine Ausführungsform, bei welcher pro Bereich eine elektrische Leitung vorgesehen ist.

FIG 1 lässt erkennen, dass die flächigen Bereiche 3a, 3b vollständig von den entsprechenden Polymerschichten 2a, 2b bedeckt sind.

Die elektrischen Leitungen (z.B. 4b) können beispielsweise teilweise unterhalb der Polymerschicht (z.B. 2b) und von dieser an dem Bauteil 1 haftenden Polymerschicht an dem entsprechenden Bereich (z.B. 3b) befestigt sein.

Die flächigen Bereiche (z.B. 3a) können eine Kante 6 aufweisen. Bauteil 1 kann mit solchen Kanten 6 produktionsbedingt versehen sein. Die Kanten 6 können derart scharf sein, dass sie für die an diesen Kanten 6 verlaufenden elektrischen Leitungen 4a eine Gefahr darstellen, wenn diese die Kanten 6 beim Einlegen/Einziehen oder durch Vibrationen in Betrieb der elektrischen Maschine 5 berühren und beispielsweise deren Isolation beschädigen.

Die Polymerschicht kann beispielsweise porenfrei sein.

Die elektrischen Leitungen 4a, 4b können beispielsweise Anschlussleitungen, Leistungsleitungen oder Sensorsignalleitungen sein.

Die Polymerschichten 2a, 2b können beispielsweise aus dem ausgehärteten Kunststoffkleber bestehen. Beispielsweise kann thermoplastischer Schmelzklebstoff, z.B. Polyolefin oder Polyamid verwendet werden. Konkret wurden gute Ergebnisse erzielt mit den Materialien 3M Scotch Weld 3731, 3789 und 3779 der 5 Firma 3M, wobei das erstgenannte Material ein Polyolefin ist und die beiden anderen Materialien Polyamide sind.

Die Polymerschichten 2a, 2b können auch RT (Raumtemperatur, ca. 25°C) härtende ausgehärtete Klebstoffe umfassen beziehungsweise aus solchen ausgebildet sein. Der verwendete Kunststoffkleber kann eine Faserverstärkung umfassen. Die Polymerschichten 2a, 2b können durch aufsprühen des Kunststoffklebers gebildet sein und beispielsweise Form einer Sprühtapete aufweisen. Der Kunststoffkleber kann chemisch härtend sein, so z.B. können Duromere Kunststoffe verwendet werden, die beispielsweise UV-härtend sind. Es können physikalisch härtende Kunststoffe als Kunststoffkleber verwendet werden. Es können gefüllte Kunststoffe (Fasern, Partikeln) als Kunststoffkleber verwendet werden, sofern diese applizierbar bleiben, z.B. in Form einer Sprühtapete. Es können auch lösemittelhaltige Kunststoffe als Kunststoffkleber verwendet werden, welche sich durch Verdunstung des Lösemittels verfestigen (z.B. Haarlack, PVA). Es können Reaktivharze (z.B. Epoxy, PEI, PU) als Kunststoffkleber verwendet werden.

Das Bauteil kann als ein Stator einer elektrischen Maschine, beispielsweise einer rotatorischen elektrischen Maschine ausgebildet sein.

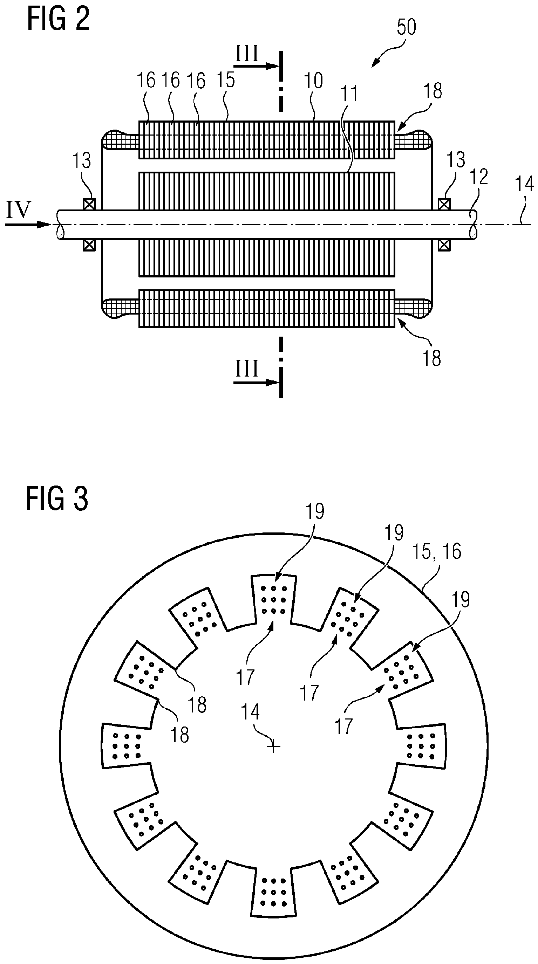

FIG 2 zeigt beispielhaft eine rotatorische elektrische Maschine 50, die einen Stator 10 aufweist. Die elektrische Maschine kann im Einzelfall als lineare elektrische Maschine ausgebildet sein. Die rotatorische elektrische Maschine 50 kann zusätzlich zum Stator 10 auch einen Rotor 11 aufweisen. Der Rotor 11 ist im Falle einer rotatorischen elektrischen Maschine drehbar auf einer Rotorwelle 12 angeordnet, die ihrerseits in Lagern 13 drehbar gelagert ist. Dadurch sind die Rotorwelle 12 und der Rotor 11 um eine Rotationsachse 14 rotierbar. Andere üblicherweise vorhandene Komponenten der elektrischen Maschine 50, wie z.B. Lagerschilde, sind in FIG 1 nicht dargestellt.

Der Stator 10 weist ein Blechpaket 15 mit einer Vielzahl von einzelnen Statorblechen 16 auf. Von den Statorblechen 16 sind in FIG 1 nur einige wenige mit ihrem Bezugszeichen versehen, um FIG 1 nicht unnötig zu überfrachten. Das Herstellen des Blechpakets 15 erfolgt auf konventionelle Art und Weise und muss daher nicht näher erläutert werden.

FIG 3 zeigt einen Schnitt durch das Blechpaket 15. Aus FIG 3 ist insbesondere erkennbar, dass in das Blechpaket 15 Nuten 17 eingebracht sind. Die Nuten 17 können - wie allgemein üblich - dadurch in das Blechpaket 15 eingebracht werden, dass bereits die Statorbleche entsprechend ausgestanzt werden. Beim Ausstanzen können die bereits erwähnten Kanten 18 entstehen, die besonders scharf sein können. Diese scharfen Kanten von den Nuten 17 sind in FIG 3 nur einige mit ihrem Bezugszeichen versehen.

In die Nuten 17 sind Wicklungen 19 eines Statorwicklungssystems eingebracht. Die Wicklungen 19 können ein mehrphasiges, beispielsweise ein dreiphasiges Statorwicklungssystem bilden. Die Wicklungen 19 der einzelnen Phasen werden in der Regel sequenziell nacheinander in die Nuten 17 eingebracht. Das Einführen der Wicklungen 19 als solches erfolgt auf konventionelle Art und Weise und muss daher nicht näher erläutert werden. Die Wicklungen 19 können nach Bedarf als sogenannte wilde Wicklungen oder als sogenannte gelegte Wicklungen ausgebildet sein.

Dabei können Bereiche der Kanten 18, die mit den Wicklungen 19 in Berührung kommen beziehungsweise kommen können, mit einer an diesen Bereichen haftenden, einen ausgehärteten Kunststoffkleber umfassenden Polymerschicht versehen werden, sodass ein direkter Kontakt zwischen den Wicklungen 19 und den Kanten 18 vermieden wird, wodurch die Wicklungen 19 vor Beschädigungen geschützt werden.

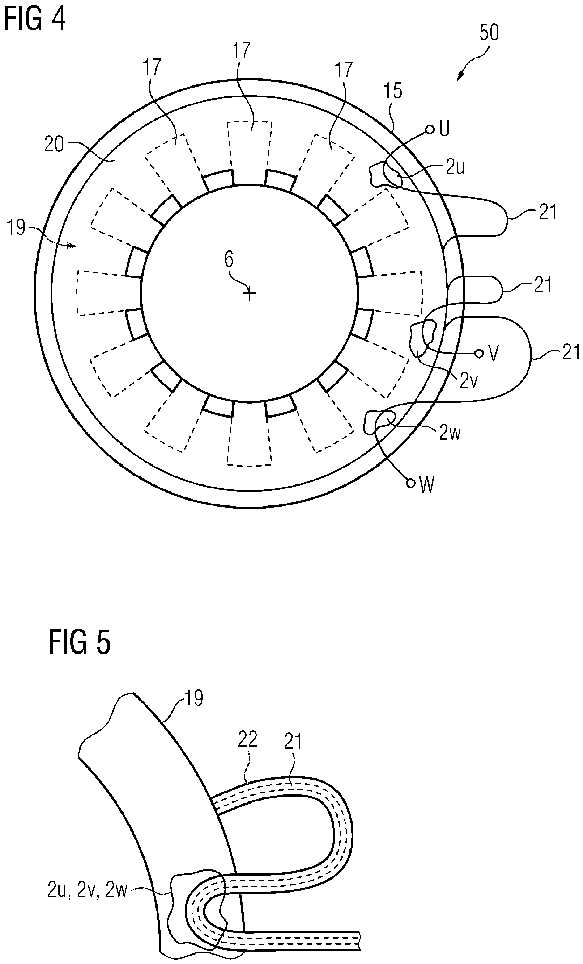

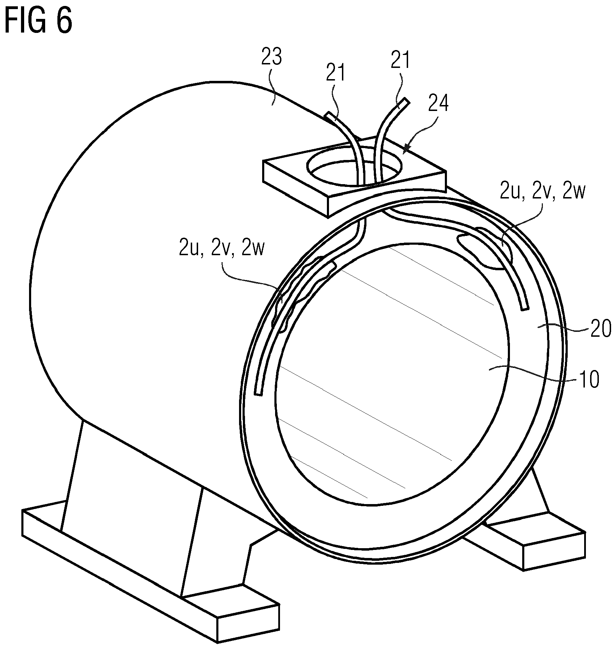

FIG 4 zeigt einen der beiden Wickelköpfe der elektrischen Maschine 50 - nämlich den anschlussseitigen Wickelkopf 20. Es ist zweckdienlich, wenn sich der anschlussseitige Wickelkopf 20 der elektrischen Maschine 50 dort befindet, wo in dem Gehäuse 23 (siehe FIG 6) der elektrischen Maschine 50 ein Klemmbrett vorgesehen.

Gemäß FIG 4 können die Wicklungen 19 im Bereich des anschlussseitigen Wickelkopfes 20 Wicklungsenden aufweisen, die elektrische Leitungen (hier: Anschlussleitungen) 21 für ein beispielsweise dreiphasiges Drehstromsystem bilden können. Die elektrischen Leitungen 21 können im Betrieb der elektrischen Maschine 50 mit Versorgungsspannungen, beispielsweise mit den Versorgungsspannungen U, V, W eines dreiphasigen Drehstromsystems beaufschlagt werden.

FIG 4 lässt erkennen, dass die elektrischen Leitungen 21 (Runddrähte, Lackdrähte) beispielsweise radial auf die Stirnseite des anschlussseitigen Wickelkopfes 20 gelegt und dort fixiert werden können. Die Leitungen 21 können jeweils mit einer entsprechenden Polymerschicht 2u, 2v, 2w an dementsprechenden Bereich der Stirnseite des anschlussseitigen Wickelkopfes 20 befestigt sein. Dabei kann die Polymerschicht 2u, 2v, 2w einen Abschnitt der jeweiligen Leitung 21 wie eine Tapete bedecken und diese durch Haften an der Stirnseite des Wickelkopfes 20 daran fixieren.

Die Polymerschichten 2u, 2v, 2w können aus dem ausgehärteten Kunststoffkleber bestehen. Dabei kann der Kunststoffkleber in Form von Fäden auf den flächigen Bereich der Stirnseite des Wickelkopfes 20 mit dem darauf aufliegenden Abschnitt der zumindest einen elektrischen Leitung 21 aufgespritzt sein, so dass die Fäden in Form überlappender Schleifen aufeinander aufgeschleudert sind und eine Netzstruktur bilden. Die Fäden können einen Durchmesser ca. 50-500pm aufweisen.

Die elektrischen Leitungen 21 können nur eine isolierende Beschichtung in Form eines Isolierlacks aufweisen. Die isolierende Beschichtung ist in den Figuren nicht mit dargestellt. Diese isolierende Beschichtung könnte bei der Handhabung der Leitungen 21 sehr leicht verletzt werden, sofern die Leitungen 11 so wie sie sind gehandhabt werden. Aus Gründen der elektrischen Spannungssicherheit und der Betriebssicherheit kann es zweckmäßig sein, die Leitungen 21 entsprechend der Darstellung in FIG 5 mit einem Isolator 22 zu umhüllen und die mit einem Isolator 22 umhüllte Leitung 21 mit der Polymerschicht 2u, 2v, 2w an der Stirnseite des anschlussseitigen Wickelkopfes 20 zu befestigen. Der Isolator 22 kann einen thermoplastischen Schmelzklebstoff umfassen beziehungsweise aus solchem bestehen.

Die elektrischen Leitungen 21 können nur über eine Teillänge umhüllt sein (z.B. beginnend am Wicklungskopf 20 und endend kurz vor dem Ende der jeweiligen Leitung 21. An dem nicht umhüllten Ende der jeweiligen elektrischen Leitung 21 kann später in einem Klemmenkasten 24 (FIG 6) der elektrischen Maschine 50 der Anschluss der entsprechenden Versorgungsspannung U, V, W erfolgen.

FIG 6 zeigt den in ein Gehäuse 23 gefügten Stator 10. Der Einfachheit halber sind in FIG 6 nur noch zwei elektrische Leitungen 21 gezeigt, die an der Stirnseite des anschlussseitigen Wickelkopfes 20 des Stators 10 mittels der an der Stirnseite haftenden Polymerschichten befestigt sind. Die elektrischen Leitungen 21 sind in den Klemmenkasten 24 des Gehäuses 23 geführt, um dort über ein Klemmbrett angeschlossen zu werden. Bei einem dreiphasigen System können sechs Anschlussleitungen, drei Phasen mit jeweils zwei Enden an der Stirnseite des Wickelkopfes befestigt werden.

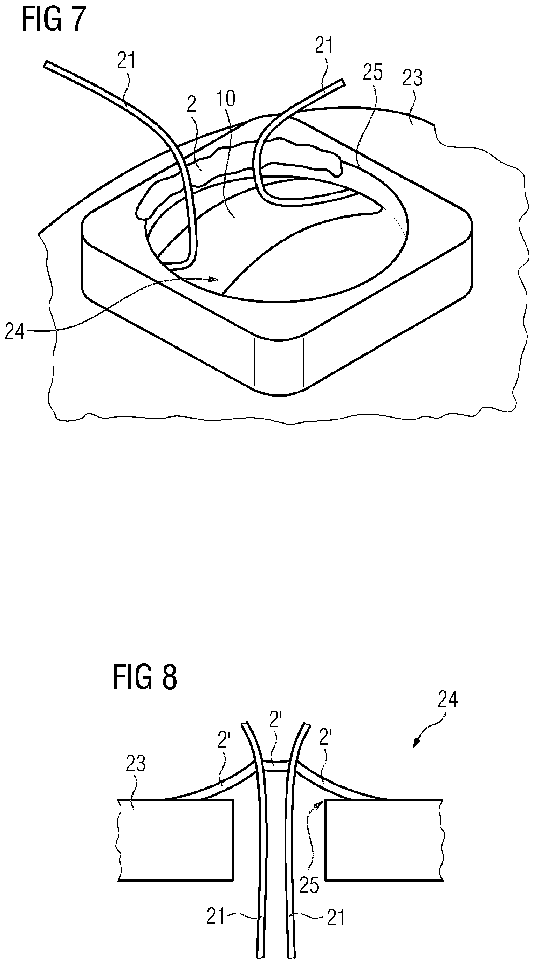

FIG 7 zeigt einen vergrößerten Ausschnitt der FIG 6, dass - neben den oben beschriebenen Kanten 18 - ein weiteres Beispiel darstellt, in dem der flächige Bereich ein scharfkantiges Gebilde aufweist. Konkret ist der FIG 7 zu entnehmen, dass das Gebilde als eine Öffnungskante 25 der Öffnung des Klemmenkastens 24 ausgestaltet sein kann. insbesondere kann FIG 7 entnommen werden, dass zumindest ein Bereich der Öffnungskante 25, der in Berührung mit den Leitungen 21 kommen könnte, durch eine am Gehäusematerial haftende Polymerschicht 2 abgedeckt ist, um die elektrischen Leitungen 21 vor Beschädigung zu schützen.

Die Polymerschicht kann ebenfalls aus dem ausgehärteten Kunststoffkleber bestehen, der in Form von Fäden auf den Bereich der Öffnungskante 25 aufgespritzt ist, so dass die Fäden in Form überlappender Schleifen aufeinander aufgeschleudert sind und eine Netzstruktur bilden, die zumindest den Bereich der Öffnungskante 25 überspannt.

FIG 8 zeigt eine Schnittdarstellung des Gehäuses 23 im Bereich des Klemmenkastens 24. FIG 8 ist zu entnehmen, dass der flächige Bereich eine Öffnung, beispielsweise eine zum Inneren des Gehäuses 23 führende Öffnung in dem Klemmkasten 24, umfassen kann. Die elektrischen Leitungen 21 können durch die Öffnung in den Klemmkasten 24 eingezogen sein, wobei die Öffnung mit durch die Öffnung verlegten elektrischen Leitungen 21 mittels einer Polymerschicht 2', die den ausgehärteten Kunststoffkleber umfasst, versiegelt sein kann. Insbesondere kann der Kunststoff die Öffnung, die als eine Kabeldurchführung ausgestaltet sein kann, verschließen (beispielsweise formschlüssig), um das Innere der elektrischen Maschine 50 Feuchtigkeit oder Verschmutzung zu schützen.

Die Polymerschicht 2' kann gleiche Materialien wie die vorgenannten Polymerschichten 2a, 2b, 2u, 2v, 2w, 2 umfassen oder aus den gleichen Materialien bestehen. Solche Polymerschichten können eine Dicke von etwa 0,1 mm bis 3 mm aufweisen, vorzugsweise zwischen 0,5 mm und 1,5 mm, beispielsweise in etwa 1,0 mm aufweisen.

Besonders vorteilhaft hat sich Verwendung von thermoplastischen Schmelzklebstoff als Material zum Bilden der Polymerschichten, insbesondere der die Kabeldurchführung verschließenden Polymerschicht 2', erwiesen.

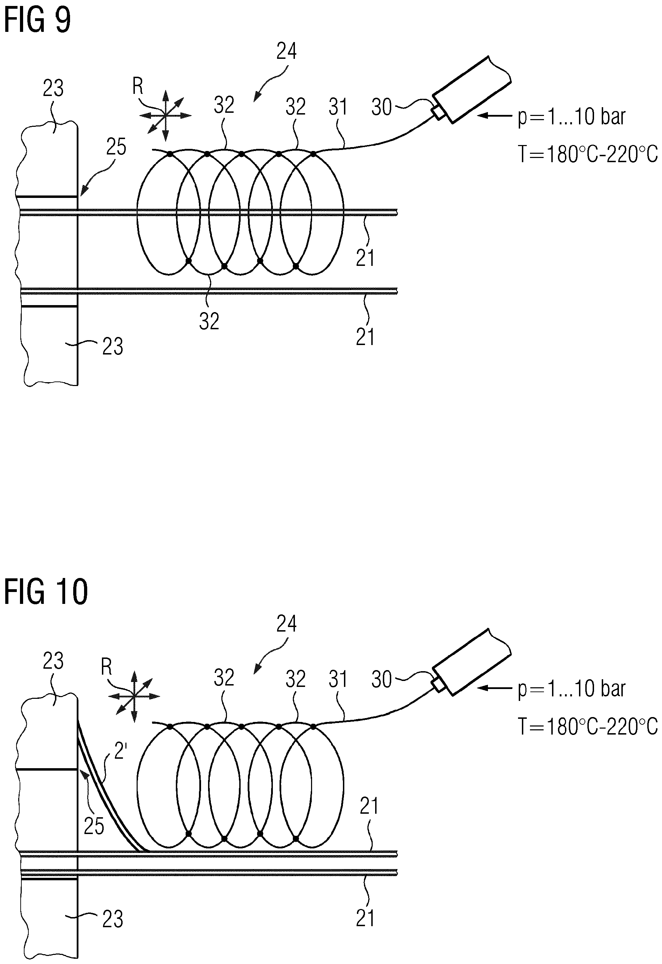

Bezugnehmend auf FIG 9 ist ein Beispiel eines Verfahrens zum Erzeugen einer an zumindest einem flächigen Bereich eines Bauteils einer elektrischen Maschine haftenden Polymerschicht gezeigt. Bei dem Verfahren wird thermoplastischer Schmelzklebstoff verwendet. Mindestens die vorgenannten Polymerschichten 2a, 2b, 2u, 2v, 2w, 2, 2' können mit dem nachstehend beschriebenen Verfahren erzeugt werden.

Konkret ist FIG 9 ein Beispiel zum Erzeugen der Polymerschicht 2` zum Verschließen der Kabeldurchführung in dem Klemmkasten 24 des Gehäuses 23 zu entnehmen. Es versteht sich, dass das Verfahren auch zum Erzeugen eines Kantenschutzes - wenn der flächige Bereich ein scharfkantiges Gebilde umfasst - und/oder zum Befestigen von elektrischen Leitungen 21 an einem flächigen Bereich, beispielsweise an dem anschlussseitigen Wickelkopf 20, seine Anwendung finden kann.

Dabei kann mittels einer Düse 30 ein Faden 31 eines thermoplastischen Schmelzklebstoffs erzeugt werden. Während des Erzeugens wird die Düse 30 derart verfahren, dass der Faden 31 durch die Verfahrbewegung der Düse 30 schichtweise und flächendeckend auf den flächigen Bereich aufgetragen wird. Dabei werden vorzugsweise alle drei räumlichen Freiheitsgrade R ausgenutzt. Der Faden 31 kann einen Durchmesser beispielsweise in einem Bereich zwischen 50 µm und 500 µm aufweisen.

In einer Ausführungsform kann der Faden 31 in Form von Schlingen 32 auf den flächigen Bereich aufgetragen werden.

Besonders, wenn der flächige Bereich die Kabeldurchführung, also eine Öffnung umfasst, ist das Auftragen in Form von Schlingen 32 vorteilhaft, weil der Schmelzklebstoff die Öffnung wie mit einem Netz überspannt.

Zwar zeigt FIG 9, dass eine der elektrischen Leitungen 21 durch die Schlingen 32 beziehungsweise durch die 3D-Helix, die durch den Faden 31 gebildet wird, durchläuft, kann der Faden 31 beliebig aufgeschleudert werden, wenn die Hohlräume zwischen den Leitungen 21 und der Kabeldurchführung zu verschließen, wie dies in FIG 8 gezeigt ist.

FIG 10 zeigt, wie ein Teil der Kabeldurchführung verschossen werden kann und eine Polymerschicht 2', die einerseits an einer der elektrischen Leitungen 21 und andererseits an dem Gehäuse 23 haftet und den Teil der Kabeldurchführung verschließt.

Es ist zweckdienlich, wenn der thermoplastische Schmelzklebstoff der Düse 30 mit einem Arbeitsdruck zugeführt wird, der zwischen 1 bar und 10 bar liegt, und/oder mit einer Arbeitstemperatur zugeführt wird, die zwischen 180°C und 220°C liegt.

In einem konkreten Versuch wurde beispielsweise ein Klebstoff auf der Basis eines Polyolefins mit einer Schmelztemperatur von ca. 200°C verwendet. Der Klebstoff wurde mit einer Arbeitstemperatur T von 220°C und einem Druck p von 3 bar aufgespritzt. Der Klebstoff trat mit einer Geschwindigkeit von ca. 5 m/s aus der Düse 30 aus. Der Abstand der Düse 14 von dem jeweiligen flächigen Bereich betrug ca. 8 cm, die Drehzahl der Düse 30 lag bei 600 U/min. Die Schlingen 32 hafteten sehr gut auf jedem der oben genannten Materialien. Bei Kabeldurchführung führten die Schlingen 32 zu einer vollständigen Überspannung der zu verschließenden Hohlräume.

Das Auftragen des thermoplastischen Schmelzklebstoffs kann vollautomatisch erfolgen.

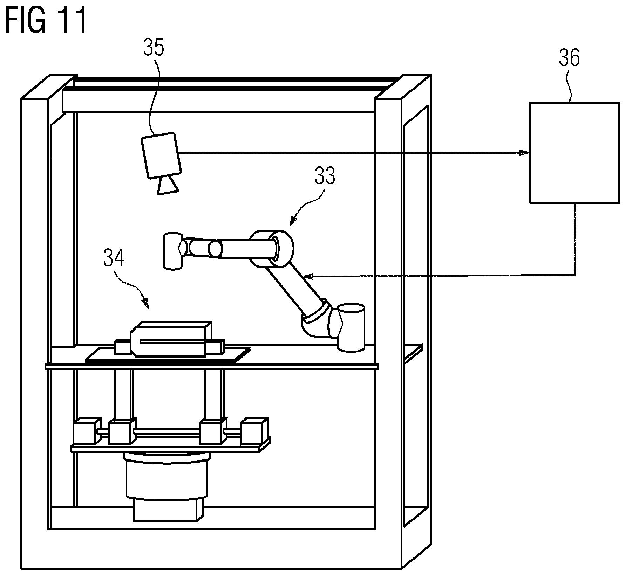

Beispielsweise kann entsprechend der Darstellung in FIG 11 eine entsprechende Fertigungseinrichtung einen Roboter 33 aufweisen, mittels dessen das Aufspritzen erfolgt. Je nach Art und Weise der Fixierung des Bauteils 1, 10 in einer Haltevorrichtung 34 der Fertigungseinrichtung ist es möglich, dass die flächigen Bereiche 3a, 3b sich jeweils an definierten Orten befinden. Darüber hinaus ist es denkbar, dass die Fertigungseinrichtung ein optisches Erfassungssystem 35 aufweist, mittels derer vor dem Aufspritzen des thermoplastischen Schmelzklebstoffes der Ort und der Verlauf der zu bespritzenden flächigen Bereichs erfasst werden. Das optische Erfassungssystem 35 kann beispielsweise als 3-D-Kamera ausgebildet sein. Im Falle einer optischen Erfassung können der erfasste Ort und der erfasste Verlauf der flächigen Bereiche einer Steuereinrichtung 36 zugeführt werden. Die Steuereinrichtung 36 ist dadurch in der Lage, den erfassten Ort und den erfassten Verlauf der zu bespritzenden flächigen Bereiche 3a, 3b beim Verfahren der Düse 30 entsprechend zu berücksichtigen.

Obwohl die Erfindung im Detail durch bevorzugte Ausführungsbeispiele näher illustriert und beschrieben wurde, ist die Erfindung nicht durch die offenbarten Beispiele eingeschränkt. Variationen hiervon können vom Fachmann abgeleitet werden, ohne den Schutzumfang der Erfindung, wie er durch die nachfolgenden Patentansprüche definiert wird, zu verlassen.

## Patentansprüche

1. Bauteil (1, 10, 23) für eine elektrische Maschine (5, 50) wobei das Bauteil (1, 10, 23) zumindest eine Polymerschicht (2, 2', 2a, 2b, 2u, 2v, 2w) umfasst, wobei die zumindest eine Polymerschicht (2, 2', 2a, 2b, 2u, 2v, 2w) aus ausgehärtetem Kunststoffkleber besteht und an zumindest einem flächigen Bereich des Bauteils (3a, 3b) ohne weitere Hilfsmittel haftet, wobei zumindest in einem in die elektrische Maschine (5, 50) eingebauten Zustand des Bauteils (1, 10, 23) an dem zumindest einen flächigen Bereich (3a, 3b) zumindest eine elektrische Leitung (4a, 4b, 21) verläuft, wobei der zumindest eine flächige Bereich mindestens ein scharfkantiges Gebilde (6, 18) aufweist, wobei das mindestens eine scharfkantige Gebilde (6, 18) mit der daran haftenden Polymerschicht abgedeckt ist, um die zumindest eine elektrische - zumindest in dem in die elektrische Maschine eingebauten Zustand des Bauteils - an dem zumindest einen flächigen Bereich verlaufende Leitung (4a, 21) vor Beschädigung zu schützen, **dadurch gekennzeichnet dass**, der Kunststoffkleber in Form von Fäden (31) auf den flächigen Bereich aufgespritzt ist, so dass die Fäden (31) in Form überlappender Schleifen (32) aufeinander aufgeschleudert sind und eine Netzstruktur bilden, die das mindestens eine scharfkantige Gebilde (6, 18) überspannt.

2. Bauteil nach Anspruch 1, wobei das Bauteil als ein Stator (10) ausgestaltet ist, wobei der zumindest eine flächige Bereich an einer Stirnseite eines anschlussseitig angeordneten Wickelkopfes (20) des Stators (10) angeordnet ist, wobei ein Abschnitt der zumindest einen elektrischen Leitung (21) auf dem flächigen Bereich aufliegt und durch die Polymerschicht (2u, 2v, 2w) an dem Wickelkopf (20) fixiert ist.

3. Bauteil nach Anspruch 2, wobei der Abschnitt durch die Polymerschicht bedeckt ist.

4. Bauteil nach Anspruch 2 oder 3, wobei der Kunststoffkleber in Form von Fäden (30) auf den flächigen Bereich mit dem darauf aufliegenden Abschnitt der zumindest einen elektrischen Leitung aufgespritzt ist, so dass die Fäden in Form überlappender Schleifen (32) aufeinander aufgeschleudert sind und eine Netzstruktur bilden.

5. Bauteil nach einem der Ansprüche 1 bis 4, wobei das Bauteil als ein Stator (10) oder ein Rotor oder ein Gehäuse (23) ausgestaltet ist.

6. Bauteil nach einem der Ansprüche 1 bis 5, wobei der Kunststoffkleber ein thermoplastischer Schmelzklebstoff ist, beispielsweise ein Polyolefin oder ein Polyamid ist.

7. Elektrische Maschine mit mindestens einem Bauteil nach einem der Ansprüche 1 bis 6.

8. Maschine nach Anspruch 7, wobei das Bauteil als ein Gehäuse (23) ausgestaltet ist, der flächige Bereich als ein Bereich des Gehäuses (23) mit mindestens einer Öffnung ausgebildet ist, wobei durch die mindestens eine Öffnung die mindestens elektrische Leitung (21) verläuft, wobei die den ausgehärteten Kunststoffkleber umfassende Polymerschicht die mindestens eine Öffnung überspannt und verschließt und sowohl an der mindestens einen elektrischen Leitung (21) als auch an dem Gehäuse (23) haftet.

9. Verfahren zum Erzeugen einer an zumindest einem flächigen Bereich eines Bauteils (1, 10, 23) einer elektrischen Maschine (5, 50) haftenden Polymerschicht (2, 2', 2a, 2b, 2u, 2v, 2w), wobei
- das Bauteil (1, 10, 23) bereitgestellt wird, wobei zumindest in einem in die elektrische Maschine (5, 50) eingebauten Zustand des Bauteils (1, 10, 23) an dem zumindest einen flächigen Bereich (3a, 3b) zumindest eine elektrische Leitung (4a, 4b, 21) verläuft, wobei der zumindest eine flächige Bereich mindestens ein scharfkantiges Gebilde (6, 18) aufweist,
- mittels einer Düse (30) ein Faden (31) eines thermoplastischen Schmelzklebstoffs erzeugt wird,
- während des Erzeugens die Düse derart verfahren wird, dass der Faden durch die Verfahrbewegung der Düse (30) schichtweise und flächendeckend auf den flächigen Bereich (3a, 3b) derart aufgetragen wird, dass der Faden (31) in Form überlappender Schleifen (32) aufgeschleudert wird, um eine Netzstruktur zu bilden, wobei die Netzstruktur das mindestens eine scharfkantige Gebilde (6, 18) überspannt, um die zumindest eine elektrische - zumindest in dem in die elektrische Maschine eingebauten Zustand des Bauteils - an dem zumindest einen flächigen Bereich verlaufende Leitung (4a, 21) vor Beschädigung zu schützen.

10. Verfahren nach Anspruch 9, wobei der Faden (31) in Form von Schlingen (32) aufgetragen wird.

11. Verfahren nach Anspruch 9 oder 10, wobei der thermoplastische Schmelzklebstoff der Düse mit einem Arbeitsdruck zugeführt wird, der zwischen 1 bar und 10 bar liegt.

12. Verfahren nach einem der Ansprüche 9 bis 11, wobei der thermoplastische Schmelzklebstoff der Düse mit einer Arbeitstemperatur zugeführt wird, die zwischen 180°C und 220°C liegt

13. Verfahren nach einem der Ansprüche 9 bis 12, wobei das Auftragen des thermoplastischen Schmelzklebstoffs vollautomatisch, insbesondere mit einem Roboter (33) erfolgt.

## Claims

1. Component (1, 10, 23) for an electric machine (5, 50), wherein the component (1, 10, 23) includes at least one polymer layer (2, 2', 2a, 2b, 2u, 2v, 2w), wherein the at least one polymer layer (2, 2', 2a, 2b, 2u, 2v, 2w) consists of cured plastic adhesive and adheres to at least one flat region of the component (3a, 3b) without further aids, wherein at least one electric line (4a, 4b, 21) runs on the at least one flat region (3a, 3b) at least when the component (1, 10, 23) is integrated into the electric machine (5, 50), wherein the at least one flat region has at least one sharp-edged structure (6, 18), wherein the at least one sharp-edged structure (6, 18) is masked with the polymer layer adhering thereto, in order to protect from damage the at least one electric line (4a, 21) running - at least when the component is integrated into the electric machine - on the at least one flat region, **characterised in that** the plastic adhesive is jetted onto the flat region in the form of threads (31), such that the threads (31) are spin-coated on top of one another in the form of overlapping loops (32) and form a network structure which spans the at least one sharp-edged structure (6, 18).

2. Component according to claim 1, wherein the component is embodied as a stator (10), wherein the at least one flat region is arranged on an end winding of a winding overhang (20) of the stator (10) arranged on the connection side, wherein a section of the at least one electric line (21) lies on the flat region and is fixed to the winding overhang (20) by the polymer layer (2u, 2v, 2w).

3. Component according to claim 2, wherein the section is covered by the polymer layer.

4. Component according to claim 2 or 3, wherein the plastic adhesive is jetted in the form of threads (30) onto the flat region containing the section of the at least one electric line lying thereon, such that the threads are spin-coated on top of one another in the form of overlapping loops (32) and form a network structure.

5. Component according to one of claims 1 to 4, wherein the component is embodied as a stator (10) or a rotor or a housing (23) .

6. Component according to one of claims 1 to 5, wherein the plastic adhesive is a thermoplastic hot melt adhesive, for example a polyolefin or a polyamide.

7. Electric machine having at least one component according to one of claims 1 to 6.

8. Machine according to claim 7, wherein the component is embodied as a housing (23) and the flat region is embodied as a region of the housing (23) containing at least one aperture, wherein the at least electric line (21) runs through the at least one aperture, wherein the polymer layer including the cured plastic adhesive spans and seals the at least one aperture and adheres both to the at least one electric line (21) and to the housing (23).

9. Method for creating a polymer layer (2, 2', 2a, 2b, 2u, 2v, 2w) adhering to at least one flat region of a component (1, 10, 23) of an electric machine (5, 50), wherein
- the component (1, 10, 23) is provided, wherein at least one electric line (4a, 4b, 21) runs on the at least one flat region (3a, 3b) at least when the component (1, 10, 23) is integrated into the electric machine (5, 50), wherein the at least one flat region has at least one sharp-edged structure (6, 18),
- a thread (31) of a thermoplastic hot melt adhesive is created by means of a nozzle (30),
- during the creation the nozzle is moved such that because of the travel of the nozzle (30) the thread is applied onto the flat region (3a, 3b) in layers and covering the whole area, such that the thread (31) is spin-coated in the form of overlapping loops (32), in order to form a network structure, wherein the network structure spans the at least one sharp-edged structure (6, 18), in order to protect from damage the at least one electric line (4a, 21) running - at least when the component is integrated into the electric machine - on the at least one flat region.

10. Method according to claim 9, wherein the thread (31) is applied in the form of meshes (32).

11. Method according to claim 9 or 10, wherein the thermoplastic hot melt adhesive is fed to the nozzle at an operating pressure of between 1 bar and 10 bar.

12. Method according to one of claims 9 to 11, wherein the thermoplastic hot melt adhesive is fed to the nozzle at an operating temperature of between 180°C and 220°C

13. Method according to one of claims 9 to 12, wherein the application of the thermoplastic hot melt adhesive takes place fully automatically, in particular using a robot (33).

## Revendications

1. Pièce (1, 10, 23) d'une machine (5, 50) électrique, dans laquelle la pièce (1, 10, 23) comprend au moins une couche (2, 2', 2a, 2b, 2u, 2v, 2w) de polymère, dans laquelle la au moins une couche (2, 2', 2a, 2b, 2u, 2v, 2w) de polymère est constituée d'une colle en matière plastique durcie et adhère à au moins une partie plane de la pièce (3a, 3b) sans autre agent auxiliaire, dans laquelle, dans au moins un état de la pièce (1, 10, 23) montée dans la machine (5, 50) électrique, au moins une ligne (4a, 4b, 21) électrique s'étend sur au moins une partie (3a, 3b) plane, dans laquelle la au moins une partie plane a au moins une structure (6, 18) à bords vifs, dans laquelle la au moins une structure (6, 18) à bords vifs est recouverte de la couche polymère, qui y adhère, afin de protéger d'un endommagement la au moins une ligne (4a, 21) électrique s'étendant - au moins dans l'état de la pièce montée dans la machine électrique - sur la au moins une partie plane, **caractérisée en ce que** la colle en matière plastique est pulvérisée sous forme de fils (31) sur la partie plane, de manière à projeter les fils (31) les uns sur les autres sous la forme de boucles (32) se superposant et à former une structure en réseau, qui recouvre au moins une structure (6, 18) à bords vifs.

2. Pièce suivant la revendication 1, dans laquelle la pièce est conformée en stator (10), dans laquelle la au moins une partie plane est disposée sur un côté frontal d'une tête (20) de bobine, disposée du côté de raccordement, du stator (10), dans laquelle un tronçon de la au moins une ligne (21) électrique s'applique à la partie plane et est immobilisé par la couche (2u, 2v, 2w) de polymère sur la tête (20) de bobine.

3. Pièce suivant la revendication 2, dans laquelle le tronçon est recouvert de la couche de polymère.

4. Pièce suivant la revendication 2 ou 3, dans laquelle la colle de matière plastique est pulvérisée sous forme de fils (30) sur la partie plane en ayant le tronçon, qui s'y applique, de la au moins une ligne électrique, de sorte que les fils sont projetés les uns sur les autres sous la forme de boucles (32) en superposition et forment une structure en réseau.

5. Procédé suivant l'une des revendications 1 à 4, dans laquelle la pièce est conformée en stator (10) ou en rotor ou en enveloppe (23).

6. Procédé suivant l'une des revendications 1 à 5, dans laquelle la colle en matière plastique est une colle fusible thermoplastique en étant, par exemple, une polyoléfine ou un polyamide.

7. Machine électrique comprend au moins une pièce suivant l'une des revendications 1 à 6.

8. Machine suivant la revendication 7, dans laquelle la pièce est conformée en enveloppe (23), la partie plane est conformée en partie de l'enveloppe (23) ayant au moins une ouverture, dans laquelle la au moins une ligne (21) électrique s'étend dans la au moins une ouverture, dans laquelle la couche polymère comprenant la colle de matière plastique durcie recouvre et ferme la au moins une ouverture et adhère tant à la au moins une ligne (21) électrique qu'également à l'enveloppe (23).

9. Procédé de production d'une couche (2, 2', 2a, 2b, 2u, 2v, 2w) de polymère adhérant a au moins une partie plane d'une pièce (1, 10, 23) d'une machine (5, 50) électrique, dans lequel
- on se procure la pièce (1, 10, 23), dans laquelle, au moins dans un état de la pièce (1, 10, 23) montée dans la machine (5, 50) électrique, au moins une ligne (4a, 4b, 21) s'étend sur la au moins une partie (3a, 3b) plane, dans laquelle la au moins une partie plane a au moins une structure (6, 18) à bords vifs,
- on produit, au moyen d'une buse (30), un fil (31) d'une colle fusible thermoplastique,
- pendant la production, on déplace la buse, de manière à déposer le fil par le mouvement de déplacement de la buse (30) couche par couche et à recouvrement de surface sur la partie plane (3a, 3b), en ce que l'on projette le fil (31) sous la forme de boucles (32) se chevauchant, afin de former une structure en réseau, dans lequel la structure en réseau recouvre la au moins une structure (6, 18) à bords vifs, afin de protéger d'un endommagement la au moins une ligne (4a, 21) électrique s'étendant - au moins dans l'état de la pièce montée dans la machine électrique - sur la au moins une partie plane.

10. Procédé suivant la revendication 9, dans lequel on dépose le fil (31) sous la forme de boucles (32).

11. Procédé suivant la revendication 9 ou 10, dans lequel on apporte la colle fusible thermoplastique à la buse sous une pression de travail, qui est comprise entre 1 bar et 10 bar.

12. Procédé suivant l'une des revendications 9 à 11, dans lequel on apporte la colle fusible thermoplastique à la buse à une température de travail, qui est comprise entre 180°C et 220°C.

13. Procédé suivant l'une des revendications 9 à 12, dans lequel le dépôt de la colle fusible thermoplastique s'effectue d'une manière entièrement automatique, en particulier par un robot (33).
